# EUROPÄISCHE PATENTSCHRIFT

(11) **EP 3 382 195 B1**
(45) Veröffentlichungstag und Bekanntmachung des Hinweises auf die Patenterteilung: **23.12.2020**
(21) Anmeldenummer: 18164449.3
(22) Anmeldetag: 28.03.2018
(51) Int. Cl.: F03D 1/06, F03D 13/20, F03D 13/10

(54) **VERWENDUNG VON TRANSPORTMITTELN BEI DER ERRICHTUNG VON WINDENERGIEANLAGEN UND MONTAGEHILFE**
USE OF MEANS OF TRANSPORT WHEN ERECTING WIND TURBINES AND MOUNTING AID
UTILISATION DES MOYENS DE TRANSPORT LORS DE LA CONSTRUCTION DES ÉOLIENNES ET AIDE AU MONTAGE

(30) Priorität: 30.03.2017 DE 102017003076
(43) Veröffentlichungstag der Anmeldung: 03.10.2018
(73) Patentinhaber: Siemens Gamesa Renewable Energy Service GmbH, 22297 Hamburg (DE)
(72) Erfinder: Edelmann, Ulf, 24647 Ehndorf (DE)
(74) Vertreter: Glawe, Delfs, Moll

(56) Entgegenhaltungen:
- EP-A2- 2 228 533
- WO-A1-2015/158351
- WO-A2-2006/101632

## Beschreibung

Die Erfindung betrifft die Verwendung von Transportmitteln bei der Errichtung von Windenergieanlagen, insbesondere bei der dafür erforderlichen Vormontage von Bauteilgruppen an dem Errichtungsort einer Windenergieanlage, sowie eine teilweise auf entsprechenden Transportmitteln basierende Montagehilfe.

Bei der Errichtung moderner Windenergieanlagen, die regelmäßig einen im Wesentlichen horizontal drehenden Rotor mit drei Rotorblättern, der an einer Gondel zum Antrieb eines darin befindlichen Generators angeordnet ist, umfassen, wobei die Gondel um eine vertikale Achse zur Einstellung der Azimutrichtung drehbar auf einem Turm gelagert ist, wird die Windenergieanlage grundsätzlich in Einzelteilen zum letztendlichen Errichtungsort transportiert. Dort werden die Einzelteile dann häufig am Boden zu Baugruppen zusammengefügt, bevor diese Baugruppen nacheinander mit Hilfe eines Krans aufeinander angeordnet, um so den Turm und schließlich die Windenergie als solche zu errichten.

Gemäß den internationalen Patentanmeldungen WO 2006/101632 A2 und WO 2015/158351 A1 können bspw. Turmsegmente zunächst am Boden aus zwei oder mehr Schalenelementen zusammengesetzt werden, bevor sie als Halbschalen oder bereits als Ganzes nacheinander zu dem Turm der Windenergieanlage aufeinandergestellt werden. Auch die Gondel kann mit ihren einzelnen Komponenten - Generator, Umrichter, Getriebe, Verkleidung, etc. - am Boden vormontiert und dann als Ganzes auf den bereits errichten Turm gehoben werden. Nicht zuletzt existiert auch ein Errichtungskonzept, bei dem der Rotor zunächst am Boden vormontiert wird, indem die Rotorblätter mit der Rotornabe zur Bildung eines Rotorstern verbunden werden, bevor der vormontierte Rotorstern mithilfe eines Krans zur bereits auf dem Turm befindlichen Gondel gehoben und dort an die Rotorwelle angebunden wird.

Zumindest für einen Teil der beschriebenen Vormontagetätigkeiten werden Montagehilfen benötigt. So ist es für die Montage von Turmsegmenthalbschalen bekannt, diese liegend auf einem dafür vorgesehenen Gerüst zu montieren, auf dem die einzelnen Schalensegmente abgelegt und anschließend untereinander verbunden werden. Eine so fertig gestellte Turmsegmenthalbschale kann anschließend entweder zuerst mit einer anderen Turmsegmenthalbschale zu einem Turmsegment verbunden und dann auf ein bereits montiertes Turmsegment aufgesetzt, oder als Turmsegmenthalbschale auf ein bereits montiertes Turmsegment aufgesetzt und anschließend in situ durch eine weitere Turmsegmenthalbschale zu einem vollständigen Turmsegment ergänzt werden.

Für die Montage des Rotorsterns ist, wie zum Beispiel in EP 2 28 533 A1 beschrieben, bekannt, die Rotornabe bodennah in vertikaler Ausrichtung an einer Montagehilfe und anschließend die Rotorblätter an der Nabe zu befestigten. Um die auf die Montagehilfe einwirkenden Momente, die insbesondere entstehen, wenn noch nicht sämtliche Rotorblätter an der Rotornabe montiert sind, auszugleichen, sind verschiedene Möglichkeiten bekannt. Zum einen können die einzelnen, bereits montierten Rotorblätter durch zusätzliche Montagestützen derart unterstützt werden, dass sie kein oder nur ein geringes Moment auf die Rotornabe ausüben. Auch ist es möglich, dass die Montagehilfe lange Stützfüße aufweist, die sich sternförmig erstrecken, um so die Auflagefläche des Montagehilfsmittels zu vergrößern. Alternativ dazu ist es möglich, das Montagehilfsmittel mit einer hohen Eigenmasse auszugestalten.

Bei den Montagehilfen aus dem Stand der Technik handelt es sich regelmäßig um aufwendige Sonderkonstruktionen, die zusätzlich zu den Einzelteilen zum Errichtungsort einer Windenergieanlage hin- und nach erfolgter Errichtung auch wieder abtransportiert werden müssen. Entsprechende Sonderkonstruktionen sind sowohl im Transport als auch in der Herstellung kostenintensiv.

Der Erfindung liegt die Aufgabe zugrunde, eine Möglichkeit zu schaffen, auf aufwendige und kostenintensive Sonderkonstruktionen als Montagehilfen bei der Errichtung von Windenergieanlagen wenigstens teilweise verzichten zu können.

Gelöst wird diese Aufgabe durch eine Verwendung gemäß dem Hauptanspruch sowie eine Montagehilfe gemäß dem nebengeordneten Anspruch 10. Vorteilhafte Weiterbildungen sind Gegenstand der abhängigen Ansprüche.

Demnach betrifft die Erfindung eine Verwendung von Flatracks zum Zusammenbau von Bauteilgruppen einer Windenergieanlage an deren Errichtungsort, wobei wenigstens zwei Flatracks mit wenigstens einem Montagehilfeelement lösbar verbunden werden und das Montagehilfeelement zur Stützung oder lösbaren Aufnahme wenigstens eines Bauteils der zu montierenden Bauteilgruppe ausgebildet ist.

Weiterhin betrifft die Erfindung eine Montagehilfe zum Zusammenbau von Bauteilgruppen einer Windenergieanlage an deren Errichtungsort umfassend wenigstens zwei Flatracks, die mit wenigstens einem Montagehilfeelement lösbar verbunden sind, wobei das Montagehilfeelement zur Stützung oder lösbaren Aufnahme wenigstens eines Bauteils der zu montierenden Bauteilgruppe ausgebildet ist.

Zunächst werden einige im Rahmen der Erfindung verwendete Begriffe erläutert.

Mit "Flatrack" sind auch der Logistik bekannte Spezial-Equipment-Container ohne Seitenwände und Dach bezeichnet, die in den typischen Containergrößen 20-Fuß und 40-Fuß verfügbar sind. Sofern ein Flatrack überhaupt Stirnwände aufweist, lassen sich diese häufig umlegen, sodass sich eine ebene Oberseite des Flatracks ergibt. Flatracks werden regelmäßig für Transportgut verwendet, welches die Maße von ISO-Containern überschreitet.

Die Erfindung hat erkannt, dass Flatracks am Errichtungsort einer Windenergieanlage entweder unmittelbar zur Verfügung stehen, weil bspw. einzelne Komponenten der Windenergieanlage auf eben solchen Flatracks angeliefert werden, oder zumindest in der Nähe vom Errichtungsort Flatracks verfügbar sind, bspw. von einem lokalen Verleiher von Logistikequipment bzw. einer Speditionen. Indem für Montagehilfen auf entsprechende, bereits vor Ort verfügbare oder mit kurzen Transportwegen bereitzustellende Flatracks zurückgegriffen wird, beschränkt sich ein Transport von Spezialequipment auf die Montagehilfeelemente, die zusammen mit den Flatracks letztendlich eine Montagehilfe bilden. Die Montagehilfeelemente weisen dabei regelmäßig Größe und Gewicht auf, die einen unproblematischen Straßentransport ermöglichen, also insbesondere weder Schwertransport noch Transport mit Überbreite erfordern. Die Montagehilfeelemente lassen sich häufig in einem ISO-Container oder auf einem Flatrack transportieren.

Für den Zusammenbau von Bauteilgruppen einer Windenergieanlage an deren Errichtungsort werden erfindungsgemäß also wenigstens zwei Flatracks mit einem Montagehilfeelement zu einer Montagehilfe verbunden. Die so geschaffene Montagehilfe kann dann zum Zusammenbau von Bauteilgruppen verwendet werden, bspw. indem die einzelnen Bauteile auf die Montagehilfe in der jeweils für den Zusammenbau geeigneten Lage abgelegt werden können oder ein einzelnes Bauteil an der Montagehilfe derart befestigt werden, dass es sich bei einem Anbau weiterer Bauteile nicht bewegt.

Es ist bevorzugt, wenn wenigstens eines der Flatracks auf seiner Unterseite mit wenigstens einer Einrichtung zur Ausnivellierung des Flatracks versehen wird. Die entsprechenden Einrichtungen können dabei mit dem Flatrack verbunden oder lediglich als Auflager für das Flatrack ausgebildet sein. Mit Hilfe einer entsprechenden Einrichtung ist es möglich, das Flatrack selbst bei unebenem Untergrund so aufzustellen, dass dessen Oberseite horizontal ausgerichtet ist. Sind mehrere Flatracks entsprechend ausgestattet, kann die durch die mehreren Flatracks gebildete Fläche eben und/oder horizontal ausgerichtet sein.

Vorzugsweise werden zwei aneinandergrenzende Flatracks miteinander verbunden. Dadurch ist es möglich, die relative Position der beiden Flatracks zueinander festzulegen. Insbesondere kann auch bei Belastung eines oder beider Flatracks vermieden werden, dass sich zwischen ihnen ein Spalt bildet.

Es ist auch möglich, dass wenigstens eines der Flatracks mit wenigstens einem Ballastelement versehen wird. Das Ballastelement, welches in einer dafür vorgesehenen Aufnahme oder lose auf dem Flatrack angeordnet oder auf sonstige Weise damit verbunden werden kann, verleiht dem fraglichen Flatrack aber auch der gesamten Anordnung aus Flatracks und Montagehilfeelement(en) eine größere Standfestigkeit.

Es ist bevorzugt, wenn wenigstens zwei Flatracks zur Bildung einer durchgehenden Montagefläche miteinander verbunden sind, und das wenigstens eine mit wenigstens zwei Flatracks verbundene Montageelement vorzugsweise ein Stützbogen zur horizontalen Montage einer Bauteilgruppe aus Schalensegmenten ist. Insbesondere können wenigsten zwei als Stützbogen ausgebildete Montageelemente vorgesehen werden. Auf eine so gebildete Montagehilfe können nacheinander einzelne Schalensegmente zur Bildung einer Turmsegmenthalbschale abgelegt und untereinander verbunden werden, bevor die Turmsegmenthalbschale als Ganzes von der Montagehilfe gehoben wird.

Alternativ dazu können wenigstens zwei, vorzugsweise drei Flatracks mit ihren Stirnseiten jeweils mit einem Montageelement zur Rotorsternmontage verbunden sind, wobei das Montageelement an seiner Oberseite ein Adapterstück zur Rotoraufnahme aufweist. Das Adapterstück kann dabei insbesondere als kreisförmiger Flansch zur Befestigung der Rotornabe, bspw. mit Hilfe von Bolzen, ausgebildet sein. Die Flatracks können mit einem Anschlussstück an den mit dem Montageelement zu verbindenden Stirnseiten versehen sein, um die Verbindung mit dem Montagehilfeelement zu vereinfachen. Bei einer so geschaffenen Montagehilfe wird zunächst die Rotornabe fest über das Adapterstück mit dem Montagehilfeelement verbunden, bevor nacheinander daran die Rotorblätter befestigt werden. Die Flatracks verleihen der Montagehilfe dabei ausreichend Stabilität, auch um die während der Montage der Rotorblätter auftretenden Momente um die Rotornabe ausgleichen zu können.

Zur Erläuterung der erfindungsgemäßen Montagehilfe wird auf die vorstehenden Ausführungen verwiesen. Die Montagehilfe kann gemäß der vorstehend beschriebenen Verwendung ausgestaltet sein.

Die Erfindung wird nun anhand vorteilhafter Ausführungsformen unter Bezugnahme auf die beigefügten Zeichnungen beispielhaft beschrieben. Es zeigen:
- Figur 1:: ein erstes Ausführungsbeispiel einer erfindungsgemäßen Verwendung von Flatracks für eine erfindungsgemäße Montagehilfe; und
- Figuren 2-5:: ein zweites Ausführungsbeispiel einer erfindungsgemäßen Verwendung von Flatracks für eine erfindungsgemäße Montagehilfe.

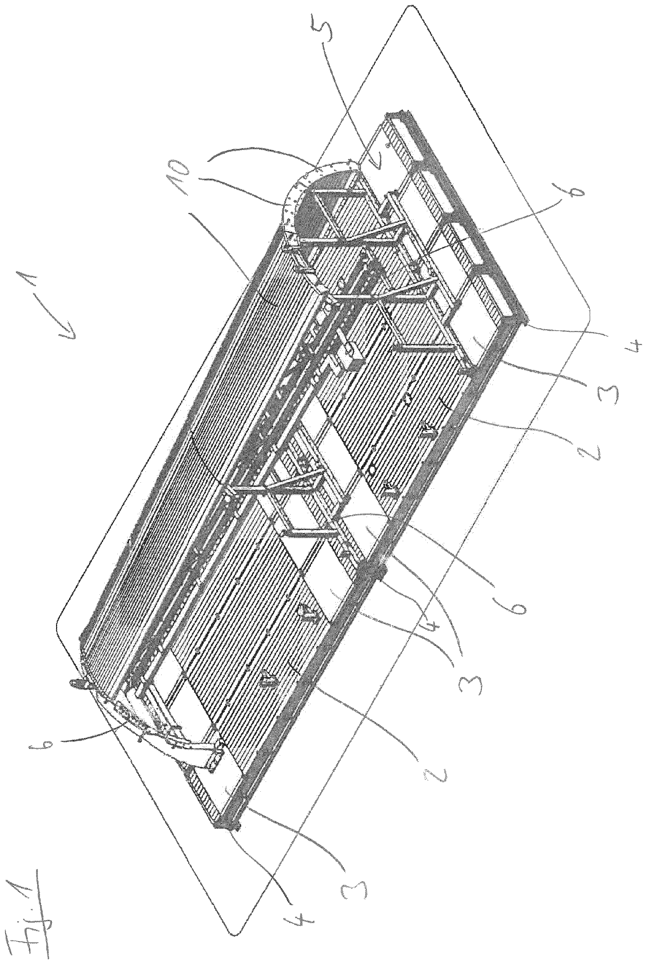

In Figur 1 ist ein erstes Ausführungsbeispiel einer erfindungsgemäßen Montagehilfe 1 gezeigt, bei der insgesamt acht Flatracks 2 verwendet werden.

Bei den Flatracks 2 handelt es sich um 40-Fuß-Flatracks mit umgelegten Stirnwänden 3 in einer 2x4-Anordnung. Die Flatracks 2 sind jeweils auf als Auflager ausgebildeten Einrichtungen 4 zur Ausnivellierung der Flatracks 2 gelagert. Jeweils aneinandergrenzende Flatracks 2 sind außerdem miteinander verbunden. Durch die Möglichkeit der Ausnivellierung der Flatracks 2 und deren Verbindung untereinander kann eine stabile, ebene, horizontal ausgerichtete Montagefläche 5 geschaffen werden.

Auf dieser Montagefläche 5 sind Montagehilfeelemente 6 vorgesehen, die jeweils mit wenigstens zwei Flatracks 2 verbunden sind. Die Montagehilfeelemente 6 sind als Stützbögen zur horizontalen Montage einer Bauteilgruppe aus Turmsegmenten 10, wobei aus Figur 1 unmittelbar ersichtlich ist, dass ein Stützbogen nicht zwingend selbst eine Bogenform aufweisen muss, die abzustützenden Bauteile aber nach dem Ablegen auf dem Stützbogen aber selbst eine Bogenform bilden.

Allein aus Gründen der Illustration sind in Figur 1 drei Schalensegmente 10 dargestellt, die bereits auf der Montagehilfe 1 abgelegt sind. Durch zwei weitere Schalensegmente 10 können diese zu einer Turmsegmenthalbschale ergänzt werden, die nach Verbindung der Schalensegmente 10 untereinander als Ganzes von der Montagehilfe 1 gehoben werden kann.

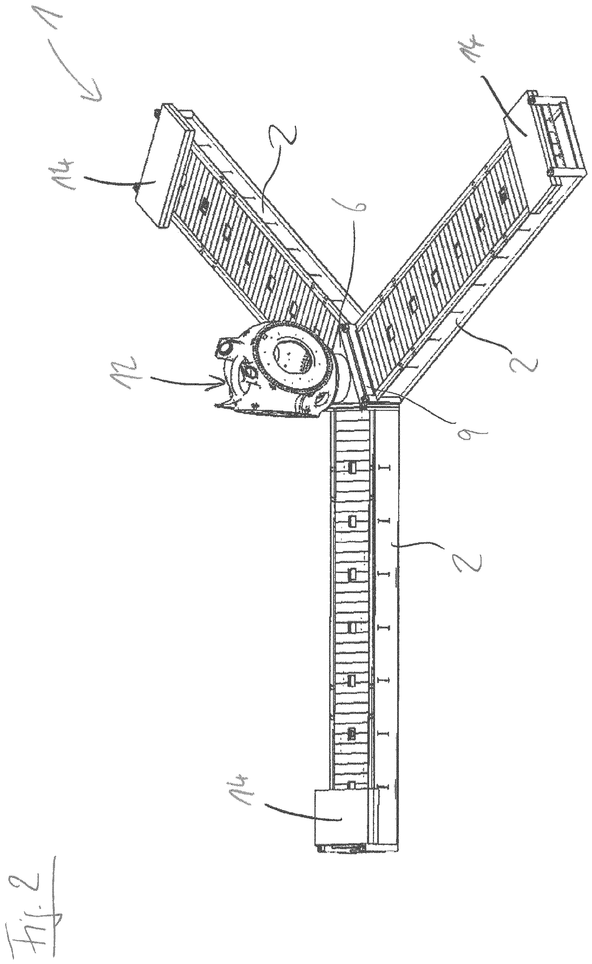

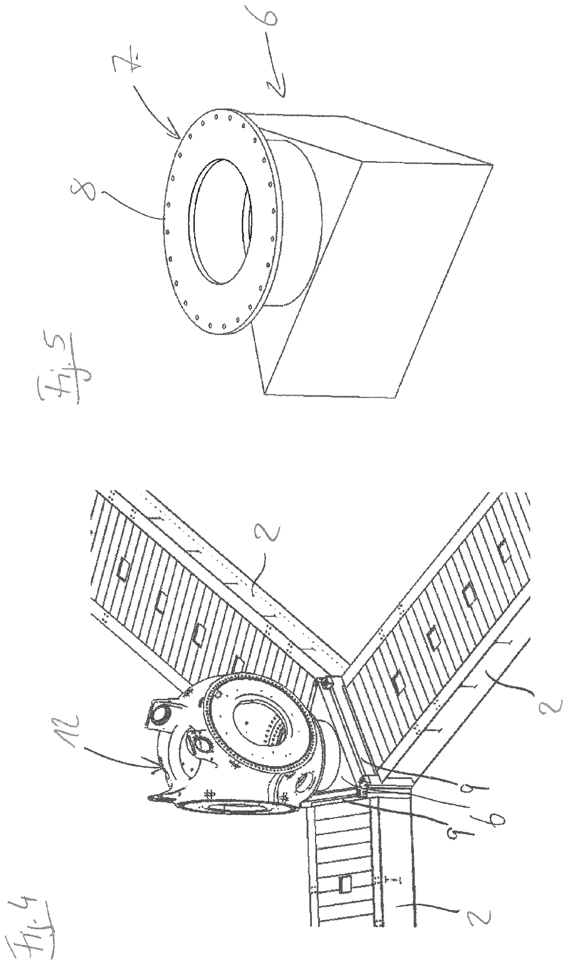

In Figuren 2 bis 5 ist ein weiteres Ausführungsbeispiel einer erfindungsgemäßen Montagehilfe 1 dargestellt, bei der ebenfalls 40-Fuß-Flatracks 2 verwendet werden, wobei diese jedoch keine - auch keine umlegbare - Stirnwand 3 (vgl. Figur 1) aufweisen.

Bei der Montagehilfe 1 gemäß Figuren 2 bis 5 ist das Montagehilfeelement 6 für die Rotorsternmontage vorgesehen. Das Montagehilfeelement 6 ist in seinem unteren Bereich dreieckförmig und weist an seiner Oberseite ein Adapterstück 7 zur Befestigung des Rotorsterns 11 daran. Das Adapterstück 7 ist dabei als kreisförmiger Flansch 8 zur Befestigung der Rotornabe 12 daran ausgebildet.

Die Flatracks 2 sind mit jeweils einer Stirnseite an dem Montagehilfeelement 6 verbunden, sodass sie sich, wie in den Figuren 2 bis 4 dargestellt, sternförmig ausgehend von dem Montagehilfeelement 6 erstrecken. Zur einfacheren Anbindung der Flatracks 2 mit dem Montagehilfeelement 6 sind die Flatracks 2 an den betroffenen Stirnseiten mit Anschlussstücken 9 versehen.

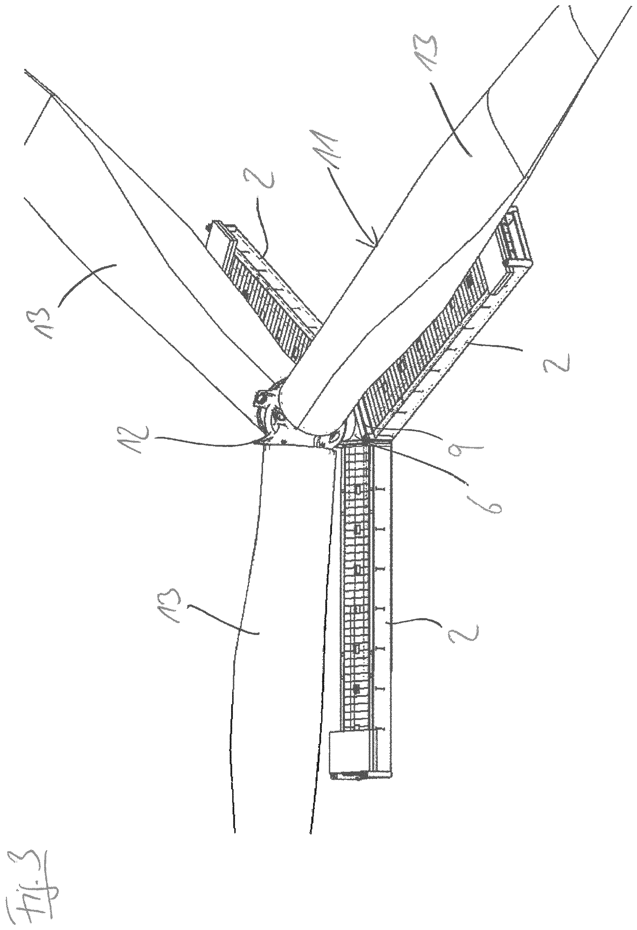

Auf den von dem Montagehilfeelement 6 entfernten Enden der Flatracks 2 sind jeweils Ballastelemente 14 angeordnet. Diese Ballastelemente 14 verleihen der Montagehilfe 1 eine ausreichende Stabilität, dass sich die Montagehilfe 1 auch bei der nacheinander erfolgenden Befestigung der einzelnen Rotorblätter 13 an der Rotornabe 12 zur Bildung des Rotorsterns 11 (vgl. Figur 3) nicht bewegt.

## Patentansprüche

1. Verwendung von Flatracks (2) zum Zusammenbau von Bauteilgruppen einer Windenergieanlage an deren Errichtungsort,
**dadurch gekennzeichnet, dass**
wenigstens zwei Flatracks (2) mit wenigstens einem Montagehilfeelement (6) lösbar verbunden werden, wobei das Montagehilfeelement (6) zur Stützung oder lösbaren Aufnahme wenigstens eines Bauteils (10, 12) der zu montierenden Bauteilgruppe ausgebildet ist.

2. Verwendung nach Anspruch 1,
**dadurch gekennzeichnet, dass**
wenigstens eines der Flatracks (2) auf seiner Unterseite mit wenigstens einer Einrichtung (4) zur Ausnivellierung des Flatracks (2) versehen wird.

3. Verwendung nach einem der vorhergehenden Ansprüche,
**dadurch gekennzeichnet, dass**
zwei aneinandergrenzende Flatracks (2) miteinander verbunden werden.

4. Verwendung nach einem der vorhergehenden Ansprüche,
**dadurch gekennzeichnet, dass**
wenigstens eines der Flatracks (2) mit wenigstens einem Ballastelement (14) versehen wird.

5. Verwendung nach einem der vorhergehenden Ansprüche,
**dadurch gekennzeichnet, dass**
wenigstens zwei Flatracks (2) zur Bildung einer durchgehenden Montagefläche (5) miteinander verbunden sind, und das wenigstens eine mit wenigstens zwei Flatracks (2) verbundene Montagehilfeelement (6) vorzugsweise ein Stützbogen zur horizontalen Montage einer Bauteilgruppe aus Schalensegmenten (10) ist.

6. Verwendung nach Anspruch 5,
**dadurch gekennzeichnet, dass**
wenigsten zwei als Stützbogen ausgebildete Montagehilfeelemente (6) vorgesehen werden.

7. Verwendung nach einem der Ansprüche 1 bis 4,
**dadurch gekennzeichnet, dass**
wenigstens zwei, vorzugsweise drei Flatracks (2) mit ihren Stirnseiten jeweils mit einem Montagehilfeelement (6) zur Rotorsternmontage verbunden sind, wobei das Montagehilfeelement (6) an seiner Oberseite eine Adapterstück (7) zur Befestigung des Rotorsterns (11) aufweist.

8. Verwendung nach Anspruch 7,
**dadurch gekennzeichnet, dass**
das Adapterstück (7) als kreisförmiger Flansch (8) zur Befestigung der Rotornabe (12) daran ausgebildet ist.

9. Verwendung nach einem der Ansprüche 7 bis 8,
**dadurch gekennzeichnet, dass**
die Flatracks (2) mit einem Anschlussstück (9) an den mit dem Montagehilfeelement (6) zu verbindenden Stirnseiten versehen ist.

10. Montagehilfe (1) zum Zusammenbau von Bauteilgruppen einer Windenergieanlage an deren Errichtungsort umfassend wenigstens zwei Flatracks (2), die mit wenigstens einem Montagehilfeelement (6) lösbar verbunden sind, wobei das Montagehilfeelement (6) zur Stützung oder lösbaren Aufnahme wenigstens eines Bauteils (10, 12) der zu montierenden Bauteilgruppe ausgebildet ist.

11. Montagehilfe nach Anspruch 10,
**dadurch gekennzeichnet, dass**
die Montagehilfe (1) wenigstens zwei zur Bildung einer durchgehenden Montagefläche (5) miteinander verbundene Flatracks (2) umfasst, und das wenigstens eine mit wenigstens zwei Flatracks (2) verbundene Montagehilfeelement (6) vorzugsweise ein Stützbogen zur horizontalen Montage einer Bauteilgruppe aus Schalensegmenten (10) ist.

12. Montagehilfe nach Anspruch 10,
**dadurch gekennzeichnet, dass**
die Montagehilfe (1) wenigstens zwei, vorzugsweise drei mit ihren Stirnseiten jeweils mit einem Montagehilfeelement (6) zur Rotorsternmontage verbundene Flatracks (2) umfasst, wobei das Montagehilfeelement (6) an seiner Oberseite ein Adapterstück (7) zur Aufnahme des Rotorsterns (11) aufweist.

13. Montagehilfe nach einem der Ansprüche 10 bis 12,
**dadurch gekennzeichnet, dass**
die Montagehilfe (1) gemäß einem der Ansprüche 2, 3, 4, 6, 8 oder 9 weitergebildet ist.

## Claims

1. Use of flat racks (2) for the building of component groups of a wind turbine at the erection site of the latter,
**characterized in that**
at least two flat racks (2) are detachably connected to at least one assembly aid element (6), wherein the assembly aid element (6) is designed for supporting or detachably receiving at least one component (10, 12) of the component group to be assembled.

2. Use according to Claim 1,
**characterized in that**
at least one of the flat racks (2) is provided on its bottom side with at least one device (4) for levelling the flat rack (2).

3. Use according to either of the preceding claims,
**characterized in that**
two adjacent flat racks (2) are connected to one another.

4. Use according to one of the preceding claims,
**characterized in that**
at least one of the flat racks (2) is provided with at least one ballast element (14).

5. Use according to one of the preceding claims,
**characterized in that**
at least two flat racks (2) are connected to one another for forming a continuous assembly surface (5), and the at least one assembly aid element (6) connected to at least two flat racks (2) is preferably a support arch for the horizontal assembly of a component group composed of shell segments (10).

6. Use according to Claim 5,
**characterized in that**
at least two assembly aid elements (6) in the form of support arches are provided.

7. Use according to one of Claims 1 to 4,
**characterized in that**
at least two, preferably three, flat racks (2) are, by way of their end sides, in each case connected to an assembly aid element (6) for rotor star assembly, wherein the assembly aid element (6) has on its top side an adaptor piece (7) for the fastening of the rotor star (11).

8. Use according to Claim 7,
**characterized in that**
the adaptor piece (7) is in the form of a circular flange (8) for the fastening of the rotor hub (12) thereto.

9. Use according to either of Claims 7 and 8,
**characterized in that**
the flat racks (2) are provided with a connection piece (9) on the end sides to be connected to the assembly aid element (6).

10. Assembly aid (1) for the building of component groups of a wind turbine at the erection site of the latter, comprising at least two flat racks (2) which are detachably connected to at least one assembly aid element (6), wherein the assembly aid element (6) is designed for supporting or detachably receiving at least one component (10, 12) of the component group to be assembled.

11. Assembly aid according to Claim 10,
**characterized in that**
the assembly aid (1) comprises at least two flat racks (2) connected to one another for forming a continuous assembly surface (5), and the at least one assembly aid element (6) connected to at least two flat racks (2) is preferably a support arch for the horizontal assembly of a component group composed of shell segments (10).

12. Assembly aid according to Claim 10,
**characterized in that**
the assembly aid (1) comprises at least two, preferably three, flat racks (2) which, by way of their end sides, are in each case connected to an assembly aid element (6) for rotor star assembly, wherein the assembly aid element (6) has on its top side an adaptor piece (7) for receiving the rotor star (11).

13. Assembly aid according to one of Claims 10 to 12,
**characterized in that**
the assembly aid (1) is refined according to one of Claims 2, 3, 4, 6, 8 and 9.

## Revendications

1. Utilisation de crémaillères plates (2) pour assembler des groupes de composants d'une éolienne sur son site d'installation,
**caractérisée en ce que**
au moins deux crémaillères plates (2) peuvent être reliées de manière amovible à au moins un élément d'auxiliaire de montage (6), l'élément d'auxiliaire de montage (6) étant conçu pour supporter ou recevoir de manière amovible au moins un composant (10, 12) du groupe de composants à monter.

2. Utilisation selon la revendication 1,
**caractérisée en ce que**
au moins une des crémaillères plates (2) est pourvue sur son côté inférieur d'au moins un dispositif (4) de mise à niveau de la crémaillère plate (2).

3. Utilisation selon l'une des revendications précédentes,
**caractérisée en ce que**
deux crémaillères plates (2) adjacentes sont reliées l'une à l'autre.

4. Utilisation selon l'une des revendications précédentes,
**caractérisée en ce que**
au moins une des crémaillères plates (2) est pourvue d'au moins un élément de ballast (14).

5. Utilisation selon l'une des revendications précédentes,
**caractérisée en ce que**
au moins deux crémaillères plates (2) sont reliées l'une à l'autre pour former une surface de montage continue (5), et l'au moins un élément d'auxiliaire de montage (6), relié à au moins deux crémaillères plates (2), est de préférence une arche de support destinée au montage horizontal d'un groupe de composants comprenant des segments de coque (10).

6. Utilisation selon la revendication 5,
**caractérisée en ce que**
au moins deux éléments d'auxiliaire de montage (6), conçus comme des arches de support, sont prévus.

7. Utilisation selon l'une des revendications 1 à 4,
**caractérisée en ce que**
au moins deux, de préférence trois, crémaillères plates (2) sont chacune reliées par leurs côtés frontaux à un élément d'auxiliaire de montage (6) pour effectuer le montage du croisillon, l'élément d'auxiliaire de montage (6) comportant sur son côté supérieur une pièce d'adaptation (7) destinée à la fixation du croisillon (11) .

8. Utilisation selon la revendication 7,
**caractérisée en ce que**
la pièce d'adaptation (7) est réalisée sous forme de flasque circulaire (8) destinée à la fixation du moyeu de rotor (12) sur elle.

9. Utilisation selon l'une des revendications 7 et 8,
**caractérisée en ce que**
les crémaillères plates (2) sont pourvues d'une pièce de raccordement (9) sur les côtés frontaux à relier à l'élément d'auxiliaire de montage (6).

10. Auxiliaire de montage (1) destiné à assembler des groupes de composants d'une éolienne sur le site d'installation de celle-ci et comprenant au moins deux crémaillères plates (2) qui sont reliées de manière amovible à au moins un élément d'auxiliaire de montage (6), l'élément d'auxiliaire de montage (6) étant conçu pour supporter ou recevoir de manière amovible au moins un composant (10, 12) du groupe de composants à monter.

11. Auxiliaire de montage selon la revendication 10,
**caractérisé en ce que**
l'auxiliaire de montage (1) comprend au moins deux crémaillères plates (2) reliées l'une à l'autre pour former une surface de montage continue (5), et l'au moins un élément d'auxiliaire de montage (6), relié à au moins deux crémaillères plates (2), est de préférence une arche de support destinée au montage horizontal d'un groupe de composants comprenant des segments de coque (10).

12. Auxiliaire de montage selon la revendication 10,
**caractérisé en ce que**
l'auxiliaire de montage (1) comprend au moins deux, de préférence trois, crémaillères plates (2) reliées chacune au niveau de leurs côtés frontaux à un élément d'auxiliaire de montage (6) pour effectuer le montage du croisillon, l'élément d'auxiliaire de montage (6) comportant sur son côté supérieur une pièce d'adaptation (7) destinée à recevoir le croisillon (11).

13. Auxiliaire de montage selon l'une des revendications 10 à 12, **caractérisé en ce que**
l'auxiliaire de montage (1) est perfectionné selon l'une des revendications 2, 3, 4, 6, 8 et 9.
